**Europäisches Patentamt**

**European Patent Office**

**Office européen des brevets**

(11) Numéro de publication : **0 511 125 A1**

# (12) DEMANDE DE BREVET EUROPEEN

(21) Numéro de dépôt : **92420117.1**

(22) Date de dépôt : **08.04.92**

(51) Int. Cl.$^5$ : **A01D 46/28**

(30) Priorité : **26.04.91 FR 9105529**

(43) Date de publication de la demande :
**28.10.92 Bulletin 92/44**

(84) Etats contractants désignés :
**AT DE ES FR IT PT**

(71) Demandeur : **SA ARNAUD FRERES**
**Zone Industrielle du Bois des Lots**
**F-26130 Saint Paul Trois Châteaux (Drôme)**
**(FR)**

(72) Inventeur : **Arnaud, Didier**
**Zone industrielle**
**F-26130 Saint Paul Trois Chateaux (FR)**

(74) Mandataire : **Perrier, Jean-Pierre et al**
**Cabinet GERMAIN & MAUREAU 12 rue de la**
**République**
**F-42000 St-Etienne (FR)**

(54) **Plan de collecte pour machine de récolte des baies et fruits.**

(57) Ce plan de collecte est du type composé de deux demi-plans de collecte, et dans lequel chaque demi-plan est formé par une rangée de plaques (4), se chevauchant d'avant en arrière et comportant chacune une nervure inférieure (16) constituant organe de fixation sur un support latéral externe (5), organe d'articulation de la plaque lors de son escamotage et moyens de rappel élastique.

Selon l'invention, chaque plaque (4) présente un bord antérieur (10), qui est incliné d'un angle (a), un bord postérieur (13) qui est incliné vers l'arrière d'un angle (d) au moins égal à la somme de l'angle (a) et de l'angle (b) de pivotement maximal de la plaque vers l'arrière, et un bord extérieur rectiligne ayant une longueur supérieure au pas de fixation des plaques (4) sur le support latéral (5), tandis que la nervure (16) n'est liée à la plaque (4) que sur la partie centrale du bord antérieur (10) en formant, d'une part, une zone (17b) d'articulation avec réduction progressive du rayon de pivotement, et, d'autre part, à l'extrémité interne de la plaque, un voile (10a) élastiquement déformable et apte à épouser le pied du végétal portant les baies ou fruits.

FIG.4

EP 0 511 125 A1

L'invention est relative aux machines de récolte des baies et fruits et concerne, plus particulièrement, le plan de collecte.

Dans une machine de récolte composée d'un châssis enjambeur apte à circuler au-dessus de la végétation, ce châssis porte des moyens de secouage de la végétation, un plan de réception et de collecte des baies, grappes ou fruits ainsi détachés, et des moyens de convoyage déplaçant la récolte, qui leur est amenée par le plan de collecte, en direction de moyens de nettoyage et de moyens de stockage.

En général, le plan de collecte est composé de deux demi-plans agencés pour laisser passer, entre eux les pieds des végétaux portant les baies ou fruits.

Selon les formes de réalisation, ces demi-plans sont soit coplanaires pour diriger la récolte dans un seul convoyeur latéral, soit sont en forme de dièdre pour diriger la récolte dans deux convoyeurs latéraux disposés de part et d'autre du plan médian vertical et longitudinal de la machine de récolte.

L'invention concerne plus particulièrement les demi-plans de collecte formés, chacun, par une rangée de plaques, aussi dénommées écailles, se chevauchant d'avant en arrière et d'une rangée sur l'autre, et comportant chacune un moyen de fixation sur un support latéral externe, une zone d'articulation pour escamotage vers l'arrière et des moyens de rappel élastique à leur position d'origine.

Comme l'indique FR 2 530 405, de telles écailles présentent l'inconvénient, lorsqu'elles sont escamotées par le passage du pied du végétal, de former entre elles des espaces par lesquels la récolte peut tomber sur le sol et être ainsi perdue.

Un autre inconvénient de ces écailles provient de leur masse importante et de la rigidité de leurs bords antérieurs pouvant blesser les pieds des végétaux lors de l'avancement de la machine. Enfin, leur mode de fixation sur le châssis est en général complexe et intervient défavorablement sur le coût de leur remplacement, remplacement qui est nécessaire en raison de leur usure par frottement sur les végétaux et entre elles.

La présente invention a pour but de remédier à ces inconvénients en fournissant un plan de collecte à écailles qui, épousant les pieds des végétaux sans risque de les blesser, procure l'étanchéité recherchée et soit facile à remplacer.

A cet effet, dans le plan de collecte selon l'invention, chaque plaque ou écaille présente un bord antérieur qui est incliné d'un angle $a$, vers l'arrière et en allant de sa fixation latérale à son bord interne, un bord interne libre de forme générale curviligne, un bord postérieur qui est incliné, vers l'arrière et en allant de l'extérieur vers l'intérieur, d'un angle $d$ au moins égal à la somme de l'angle $a$ et de l'angle $b$ de pivotement maximal de la plaque vers l'arrière, et un bord extérieur rectiligne ayant une longueur supérieure au pas de fixation des plaques sur un support latéral de direction longitudinale, tandis que la nervure pour la fixation de la plaque sur le support n'est liée à celle-ci que par la partie centrale du bord antérieur en formant, d'une part, entre cette liaison et la fixation sur le support, une zone d'articulation à réduction progressive du rayon de pivotement, et, d'autre part, à l'extrémité interne'de la plaque, un voile élastiquement déformable apte à épouser le pied du végétal portant les baies ou fruits.

On conçoit aisément que, lors du déplacement de la machine équipée de telles plaques formant deux demi-plans de collecte se chevauchant d'avant en arrière et d'une rangée sur l'autre comme dans les machines actuelles, le contact du pied du végétal avec le bord antérieur des plaques des deux demi-plans de collecte tend, en même temps qu'il fait pivoter les plaques vers l'arrière, à provoquer le redressement vers le haut du bord libre de chaque plaque. Il en résulte que ce bord libre, en raison de son élasticité qui tend à naturellement à maintenir plaquer sur le pied, épouse parfaitement le profil de ce pied en réduisant la dimension de l'ouverture se formant entre ce pied et les plaques situées en amont et en aval de lui.

Par ailleurs, et grâce à la forme arrondie du bord interne de chaque plaque, celle-ci ne présente pas de partie contondante risquant de blesser le pied.

Durant le pivotement des plaques vers l'arrière, le bord postérieur de chaque plaque, forme, en raison de son angulation par rapport au bord antérieur, un volet qui, quel que soit le pivotement de la plaque postérieur qu'il chevauche, couvre la partie antérieure de cette plaque et évite toute formation d'espace.

Enfin, grâce à l'articulation avec réduction du rayon de pivotement au fur et à mesure que la plaque pivote vers l'arrière, le centre de pivotement de la plaque se déplace sur la nervure vers l'intérieur de la machine, ce qui accélère son effacement et limite sa course totale de pivotement.

Dans une forme d'exécution préférée de l'invention, la nervure de chaque plaque est munie, dans sa zone de fixation sur le support correspondant, d'un tenon sensiblement en T dont la barre transversale est inclinée par rapport à la barre longitudinale constituée par la nervure, et est apte à être engagée par coulissement vertical dans une mortaise, de section équivalente, ménagée sur le bord interne du support latéral.

Grâce à ce mode de liaison, particulièrement simple et peu onéreux, le montage des plaques ou leur démontage pour les remplacer, est particulièrement simple à réaliser, puisqu'il ne nécessite pas de manipuler une quelconque vis ou tout autre moyen de fixation permanent.

Avantageusement, chacun des supports latéraux sur lesquels sont fixées les plaques, est lui-même monté pivotant autour d'un'axe parallèle à l'axe longitudinal de la machine et est associé, d'une part, à des moyens aptes à le faire pivoter pour modifier la position angulaire des plaques qu'il porte, et d'autre part, à des moyens déverrouillables le calant dans chacune de ses positions angulaires.

Cet agencement permet donc, en fonction de la configuration du terrain sur lequel circule la machine de récolte, d'adapter l'inclinaison de chacun des demi-plans pour que chacun d'eux assure toujours une bonne distribution par gravité de la récolte en direction des moyens de réception et de convoyage latéraux.

D'autres caractéristiques et avantages ressortiront de la description qui suit en référence au dessin schématique et représentant, à titre d'exemple non limitatif, une forme d'exécution de ce plan de collecte dans le cas de son application à une machine à vendanger de type tracté comportant un plan de collecte formant un dièdre saillant vers le haut.

Figure 1 est une vue partielle en plan par dessus montrant le plan de collecte de la machine,

Figure 2 est une vue partielle en perspective montrant les deux éléments constitutifs de chaque demi-plan de collecte, à savoir une écaille et son support latéral,

Figure 3 est une vue partielle en plan par dessus avec coupe partielle montrant, plus en détails, la fixation d'une plaque sur le support et ses angulations,

Figure 4 est une vue partielle en plan par dessus montrant la déformation des plaques, lorsque la machine est traversée par le pied de vigne,

Figure 5 est une vue partielle en coupe transversale suivant V-V de figure 4.

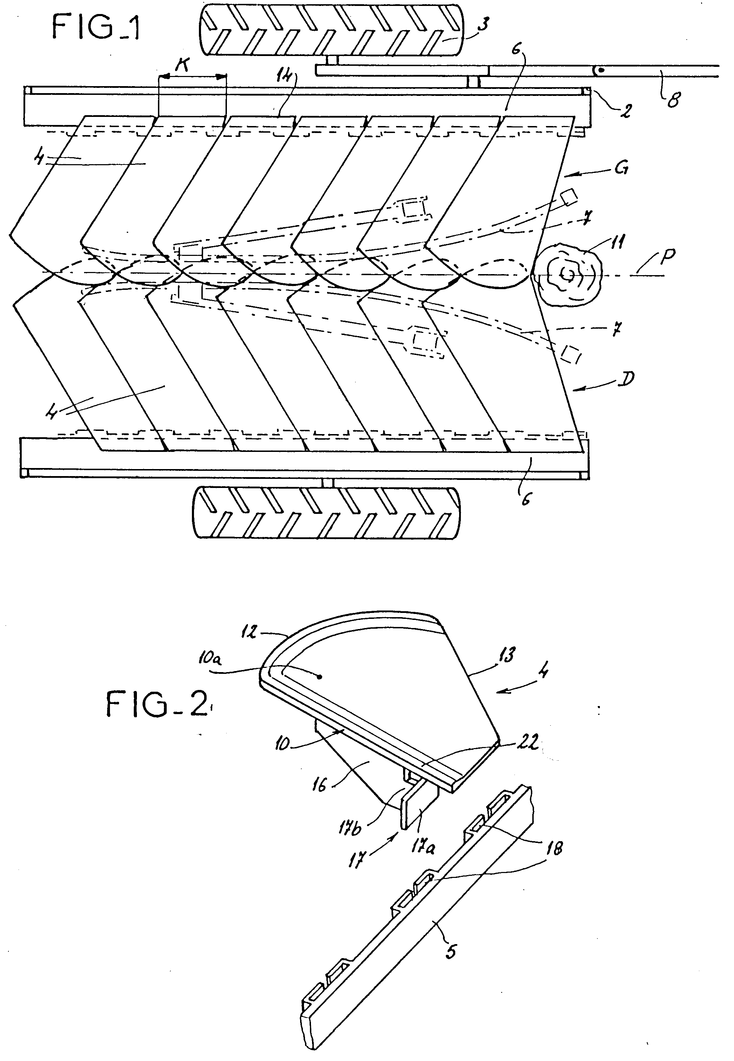

Comme le montre la figure 1, cette machine à vendanger est composée d'un châssis 2 en forme de portique enjambeur muni de roues 3 et portant, de part et d'autre de son plan médian vertical longitudinal, représenté par l'axe P à la figure 1, et en partie inférieure deux demi-plans de collecte, désignés de façon générale par G et D. Chaque demi-plan de collecte est lui-même composé d'une rangée de plaques 4 se chevauchant d'avant en arrière. Dans cette forme d'exécution, les bords internes des plaques du demi-plan de collecte G chevauche également les bords internes des plaques du demi-plan de collecte D, de façon à former, de part et d'autre du plan P, une surface totalement fermée séparant la récolte du sol, disposé au-dessous du plan de collecte. Chaque plaque est fixée sur des supports latéraux 5 disposés longitudinalement sur le châssis et débouche par son bord externe au-dessus d'un couloir latéral 6, associé à des moyens de convoyage, non représentés, conduisant la récolte à des moyens de traitement et de stockage.

A la figure 1, 7 désigne les moyens de secouage de la végétation et 8 le timon latéral attelé à l'arrière de l'engin tracteur, non représenté.

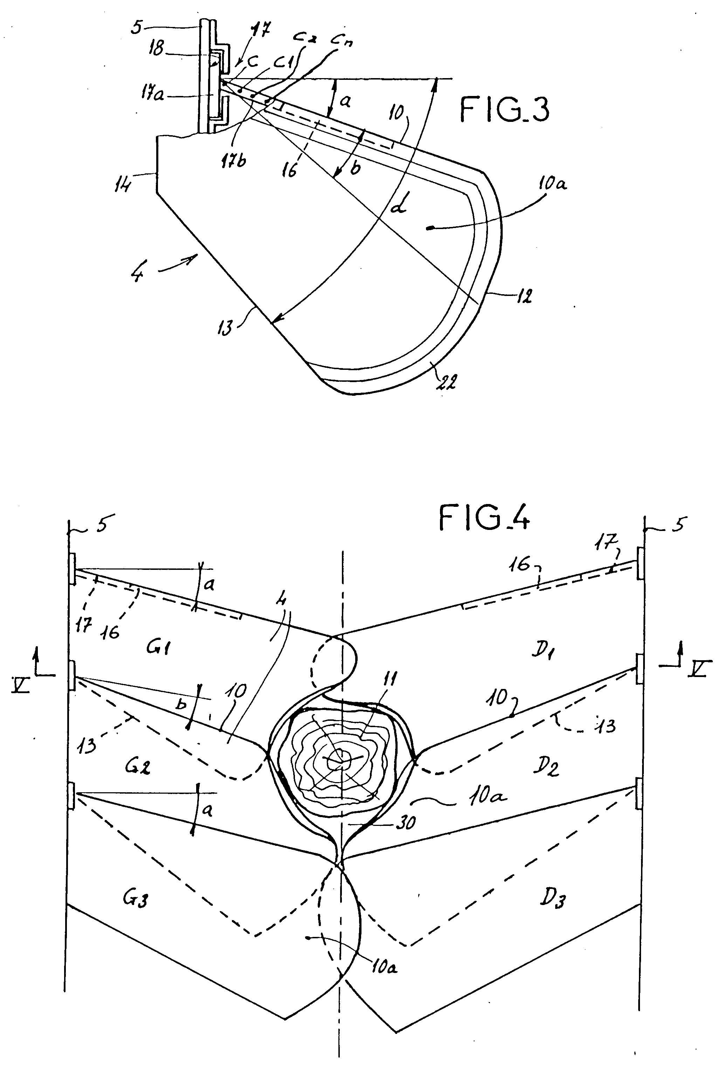

Selon l'invention, chaque plaque ou écaille 4 présente, en vue de dessus, une forme générale triangulaire tronquée lui donnant l'aspect d'un pétale. Précisément, le bord antérieur 10 de chaque plaque 4 est incliné, comme le montre la figure 3, vers l'arrière et en allant de sa zone de liaison 7 avec le support latéral 5 en direction de son bord interne 12, d'un angle a, dont la valeur est comprise entre 15 et 25 °, et par exemple est de l'ordre de 20 °. Le bord interne 12 de la plaque a une forme générale curviligne, à trajectoire dégageante, tandis que son bord postérieur 13 est également incliné, vers l'arrière en allant de l'extérieur vers l'intérieur, d'un angle d. La valeur de cet angle d est au moins égale à la somme de la valeur de l'angle a, d'inclinaison du bord antérieur 10 par rapport au plan médian transversal de la machine, et de la valeur de l'angle b du pivotement maximal de la plaque vers l'arrière.

Comme le montre plus en détails la figure 1, le bord extérieur 14 de chaque plaque 4 a une longueur qui est au moins égal au pas de fixation K des plaques sur chaque support 5.

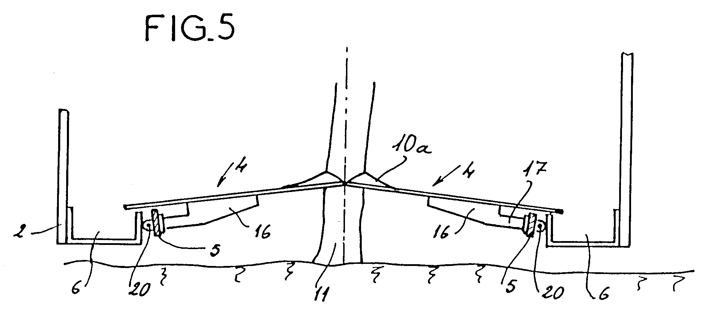

On conçoit aisément que lors du pivotement vers l'arrière d'une plaque quelconque, et par exemple, celle référencée G2 ou D2 à la figure 4, son bord antérieur 10 reste toujours occulté vers le bas par le bord postérieur 13 de la plaque qui la précède, à savoir celle G1 ou D1, en évitant ainsi la chute des baies vers le sol.

Chaque plaque 4 est réalisée en matière synthétique souple et déformable, et est solidaire d'une nervure inférieure 16 à laquelle elle est liée uniquement par la partie centrale de son bord antérieur 10. Grâce à cet agencement, la partie interne 10a du bord antérieur 10 forme un voile qui est libre de se déformer, comme cela sera précisé plus loin.

Comme montré figure 3, la nervure 16 se prolonge, sous le côté externe de la plaque, par un tenon 17, de section sensiblement en T et composé d'une barre transversale 17a, inclinée par rapport à la barre longitudinale 17b, elle-même disposée dans le prolongement de la nervure 16. Ce tenon est apte à être engagé dans une mortaise 18, ménagée sur le bord interne du support latéral 5. Bien entendu, cette mortaise a une section équivalente à celle du tenon 17 pour le recevoir avec un ajustement glissant, sans jeu fonctionnel important.

Grâce à ce mode de liaison, la mise en place et l'enlèvement de chaque plaque 4 sont immédiats, très aisés, et ne nécessitent aucun outil, ce qui réduit considérablement le temps d'entretien de la machine.

Dans une forme d'exécution préférée, chacun des deux supports latéraux 5 est monté pivotant, autour d'un axe qui, représenté en 20 à la figure 5, est parallèle au plan médian longitudinal P de la machine. En outre, chaque support 5 est relié à des moyens permettant de modifier sa position angulaire, tels qu'une timonerie à actionnement manuel ou un vérin actionnable depuis le tracteur, et à des moyens le calant dans chacune des positions qui peuvent lui être données. Plus précisément, et pour réglage d'adaptation propre à un terrain de récolte, les moyens de réglage et de calage, sont constitués par les vis fixant chaque support sur des éléments du châssis 2.

Un tel dispositif présente un avantage au niveau de la construction, puisque les plaques 14 n'ont pas besoin d'être inclinées dans le plan vertical par rapport à leurs nervures de fixation 16, et un autre avantage au niveau du fonctionnement de la machine, puisqu'il est possible, en cours de récolte et en fonction de la configuration du sol, notamment du devers du terrain, de régler l'inclinaison de chaque demi-plan de collecte, afin que les baies ou grappes tombant sur eux puissent toujours être dirigées par gravité dans les canaux latéraux 6, avec une vitesse ni trop lente, réduisant le rendement, si trop rapide pouvant les endommager dans leur chute sur les moyens de convoyage.

Il faut noter que cette faculté de réglage n'est possible que grâce à l'étanchéité exceptionnelle procurée par les deux demi-plans de collecte G et D autour des pieds des végétaux, comme cela va maintenant être précisé en référence à la figure 4.

Lorsque la machine à vendanger se déplace au-dessus d'une rangée de ceps de vigne 11, les plaques 4 disposées les plus en avant de chacun de ces deux demi-plans de collecte, à savoir celles G1 et D1, rencontrent d'abord le ceps 11, puis elles sont suivies par celles G2 et D2, par celles G3 et D3 et ainsi de suite. Lorsque le plan médian longitudinal de la machine coïncide avec l'alignement des ceps, chaque ceps vient en contact avec la partie 10a, sans nervure de renfort, de chaque plaque. L'effort résistant du ceps 11 provoque le pivotement des plaques gauche et droite par rapport à leur zone de fixation sur le support 5. En pratique et en raison de la forme du tenon d'encastrement, cette rotation ne s'effectue pas sur un point précis de la barre 17b du tenon, mais, comme montré figure 3, autour d'un centre C qui a tendance à se déplacer en C1-C2 et Cn, en se rapprochant du plan médian de la machine, et cela au fur et à mesure que la raideur de la barre 17b s'accroît. Il en résulte une réduction progressive du rayon de pivotement et une augmentation de la course de dégagement qui accélère l'effacement de la plaque, par rapport au ceps 11 et par rapport à un pivotement de rayon constant centré en C.

Durant ce pivotement, comme le montre plus en détails la figure 4, le bord interne libre 1 de chaque plaque 4 est soumis, en raison de la forme en dièdre des deux demi-plans G et D et à la souplesse de la partie 10a, à un redressement vers le haut qui lui permet d'envelopper le pied en réduisant au minimum la surface des espaces 30 par lesquels les baies récoltées et le jus peuvent tomber directement sur le sol.

De façon connue, le rappel en position normale de chaque plaque est assuré par l'élasticité de la partie 17b du tenon.

Avantageusement, et comme montré aux figures 2 et 3, chaque plaque 14 est munie sur son bord antérieur 10 et sur bord interne 12, d'un bourrelet de protection 22 formé par une surépaisseur de sa matière constitutive. Ce bourrelet n'affecte pas la déformabilité de l'extrémité interne de la plaque 4, améliore la protection des ceps 11 contre les blessures par contact de la plaque, et augmente le temps d'usure de cette plaque par frottement contre les ceps.

Il est évident que le demi-plan de collecte selon l'invention peut aussi être utilisé avec un plan complémentaire coplanaire pour fournir un plan n'alimentant qu'un seul moyen de convoyage, et cela sur des machines de récolte tractées ou motorisées.

**Revendications**

1. Plan de collecte pour machine de récolte des baies et fruits du type composé de deux demi-plans (G-D) de collecte, disposés de part et d'autre du plan médian vertical (P) de la machine, se recouvrant dans cette zone, et dirigeant la récolte vers des moyens de réception et de convoyage, chaque demi-plan étant formé par une rangée de plaques ou écailles (4), se chevauchant d'avant en arrière et comportant chacune une nervure inférieure (16) constituant organe de fixation sur un support latéral externe (5), organe d'articulation de la plaque lors de son escamotage et moyens de rappel élastique, **caractérisé en ce que** chaque plaque (4) présente un bord antérieur (10), qui est incliné d'un angle (a), vers l'arrière et en allant de sa zone de fixation latérale vers son bord interne libre, un bord interne libre (12) de forme générale curviligne, un bord postérieur (13) qui est incliné vers l'arrière, en allant de l'extérieur vers l'intérieur, d'un angle (d) au moins égal à la somme de l'angle (a) et de l'angle (b) de pivotement maximal de la plaque vers l'arrière, et un bord extérieur rectiligne ayant une longueur supérieure au pas de fixation (K) des plaques (4) sur le support latéral (5) de direction longitudinale, tandis que la nervure (16) n'est liée à la plaque (4) que sur la partie centrale du bord antérieur (10) en formant, d'une part, entre cette liaison et la fixation sur le support (5), une zone (17b) d'articulation avec réduction progressive du rayon de pivotement, et, d'autre part, à l'extrémité interne de la plaque, un voile (10a) élastiquement déformable et apte à épouser le pied du végétal portant les baies ou fruits.

2. Plan de collecte selon la revendication 1, **caractérisé en ce que** la nervure (16) de chaque plaque est munie, dans sa zone de fixation sur le support, d'un tenon (17) sensiblement en T, dont la barre transversale (17a) est inclinée par rapport à la barre longitudinale (17b) et est apte à être engagée, par coulissement vertical, dans une mortaise (18), de section équivalente, ménagée sur le bord interne du support latéral (5) correspondant.

3. Plan de collecte selon l'une quelconque des revendications 1 et 2, **caractérisé en ce que** chaque plaque (4) est munie sur ses bords, antérieur (10) et interne (12), d'un bourrelet de protection (22) formé par une surépaisseur de sa matière constitutive.

4. Plan de collecte selon l'une quelconque des revendications 1 à 3, **caractérisé en ce que** chacun des deux supports latéraux (5), sur lesquels sont fixées les plaques (4), est monté pivotant autour d'un axe (20), parallèle à l'axe longitudinal de la machine et est associé, d'une part, à des moyens aptes à le faire pivoter pour modifier la position angulaire des plaques (4) qu'il porte, et d'autre part, à des moyens déverrouillables le calant dans chacune de ses positions angulaires.

FIG.1

FIG.2

FIG.3

FIG.4

EP 0 511 125 A1

FIG.5

**Office européen des brevets**

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | FR-A-2 530 405 (LIGONES) <br> * page 4, ligne 33 - page 10, ligne 36; figures 1-6 * <br> --- | 1-2 | A01D46/28 |
| A | US-A-3 690 054 (DE CARLO ET AL.) <br> * colonne 1, ligne 29 - ligne 57; revendication 1; figures 1-5 * <br> --- | 1 | |
| A | AU-B-432 567 (CHISHOLM - RYDER CO.) <br> * page 11, alinéa 3 - page 17, alinéa 1; figures 1-9 * <br><br> ----- | 1,3 | |
| | | | **DOMAINES TECHNIQUES RECHERCHES (Int. Cl.5)** <br><br> A01D |

Le présent rapport a été établi pour toutes les revendications

| Lieu de la recherche | Date d'achèvement de la recherche | Examinateur |
|---|---|---|
| LA HAYE | 15 JUILLET 1992 | FONTS CAVESTANY A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 
& : membre de la même famille, document correspondant

EPO FORM 1503 03.82 (P0403)